Europäisches Patentamt

European Patent Office

Office européen des brevets

(19)

(11) **EP 0 466 900 B1**

(12) **FASCICULE DE BREVET EUROPEEN**

(45) Date de publication et mention
de la délivrance du brevet:
**24.01.1996 Bulletin 1996/04**

(21) Numéro de dépôt: **91904071.7**

(22) Date de dépôt: **11.02.1991**

(51) Int Cl.6: **C01B 17/04**

(86) Numéro de dépôt international:
**PCT/FR91/00101**

(87) Numéro de publication internationale:
**WO 91/12201 (22.08.1991 Gazette 1991/19)**

(54) **PROCEDE DE DESULFURATION D'UN MELANGE GAZEUX RENFERMANT H2S ET SO2 AVEC RECUPERATION DESDITS COMPOSES SOUS LA FORME DE SOUFRE**

**VERFAHREN DER ENTSCHWEFELUNG EINER GASMISCHUNG, DIE H2S UND SO2 ENTHÄLT MIT RÜCKGEWINNUNG DIESER VERBINDUNGEN IN DER FORM VON SCHWEFEL**

**METHOD FOR DESULPHURISING A GASEOUS MIXTURE CONTAINING H2S AND SO2 AND RECOVERING SAID COMPOUNDS IN THE FORM OF SULPHUR**

(84) Etats contractants désignés:
**AT BE CH DE DK ES FR GB GR IT LI LU NL SE**

(30) Priorité: **13.02.1990 FR 9001649**

(43) Date de publication de la demande:
**22.01.1992 Bulletin 1992/04**

(73) Titulaire: **ELF AQUITAINE PRODUCTION**
**F-92400 Courbevoie (FR)**

(72) Inventeurs:
• **VOIRIN, Robert**
**F-64300 Orthez (FR)**

• **PHILIPPE, André**
**F-64300 Orthez (FR)**

(74) Mandataire: **Boillot, Marc**
**F-92078 Paris La Défense (FR)**

(56) Documents cités:
**WO-A-87/02653          DE-A- 3 526 706**
**US-A- 4 054 642**

Remarques:
Le dossier contient des informations techniques présentées postérieurement au dépôt de la demande et ne figurant pas dans le présent fascicule.

**Description**

L'invention a trait à un procédé de désulfuration d'un mélange gazeux renfermant $H_2S$ et $SO_2$ avec récupération desdits composés sous la forme de soufre.

On sait que $H_2S$ réagit avec $SO_2$ en présence de catalyseurs, par exemple à base d'un ou plusieurs oxydes métalliques tels que l'alumine ou l'oxyde de titane, pour former du soufre selon la réaction de CLAUS, qui s'écrit

$$2\,H_2S + SO_2 \rightleftarrows \frac{3}{n}\,S_n + 2\,H_2O$$

Dans les citations FR-A-2224203 et FR-A-2242144, la réaction précitée est mise en oeuvre à des températures supérieures à 200°C, qui correspondent à un déroulement de la réaction en phase vapeur, en présence de catalyseurs résultant de l'association d'alumine et d'un composé de titane (FR-A-2224203) ou d'alumine et d'un composé d'un métal choisi parmi l'yttrium, le lanthane et les éléments de la série des lanthanides de numéros atomiques allant de 58 à 71 (FR-A-2242144).

On a maintenant trouvé que les catalyseurs du type de ceux définis dans les citations ci-dessus, d'une part, étaient d'excellents promoteurs de la réaction de CLAUS aux températures inférieures à la température de rosée du soufre formé par ladite réaction, c'est-à-dire aux températures pour lesquelles le soufre produit se dépose sur le catalyseur, et, d'autre part, constituaient à ces températures des pièges à soufre efficaces, et que de ce fait de tels catalyseurs convenaient parfaitement dans les procédés catalytiques de désulfuration de mélanges gazeux renfermant $H_2S$ et $SO_2$ faisant appel à la réaction de ÇLAUS mise en oeuvre aux températures inférieures au point de rosée du soufre formé par cette réaction.

L'invention propose donc un procédé de désulfuration d'un mélange gazeux renfermant $H_2S$ et $SO_2$ avec récupération desdits composés sous la forme de soufre, dans lequel on met ledit mélange gazeux en contact avec un catalyseur, qui est un promoteur de la réaction de CLAUS de formation de soufre entre $H_2S$ et $SO_2$ et comporte au moins une portion terminale constituée d'une masse catalytique composite résultant de l'association d'alumine avec au moins un composé d'un métal choisi parmi le titane, l'yttrium, le lanthane et les éléments des terres rares ayant un numéro atomique allant de 58 à 71, ledit procédé se caractérisant en ce que la mise en contact du mélange gazeux à désulfurer avec le catalyseur promoteur de la réaction de CLAUS est réalisée à des températures inférieures à la température de rosée du soufre produit par ladite réaction de telle sorte que ledit soufre se dépose sur le catalyseurs, et en ce que dans la masse catalytique composite calcinée, la teneur pondérale globale du ou des composés de titane, yttrium, lanthane ou terres rares, exprimée en poids d'oxyde, représente 1 à 20 % de la somme de ladite teneur pondérale globale et du poids d'alumine.

Dans le catalyseur utilisé dans le procédé selon l'invention pour promouvoir la réaction de CLAUS entre $H_2S$ et $SO_2$, la masse catalytique composite représente, comme indiqué ci-dessus, au moins une portion terminale dudit catalyseur et peut aller jusqu'à constituer la totalité de ce catalyseur.

Les métaux, dont un ou plusieurs composés sont associés à l'alumine dans la masse catalytique composite, sont plus spécialement le titane, l'yttrium, le lanthane, le néodyme, le praséodyme, le samarium et le gadolinium et tout particulièrement le titane et le lanthane.

Le ou les composés de titane, yttrium, lanthane ou terres rares tels que néodyme, praséodyme, samarium et gadolinium, que l'on associe à l'alumine pour former la masse catalytique composite consistent, notamment, en oxydes ou encore en sels inorganiques ou organiques tels que chlorures, oxychlorures, sulfates, acétates et, lorsqu'ils existent, nitrates.

A titre facultatif, la masse catalytique composite, peut encore renfermer une faible quantité d'au moins un composé d'un élément choisi parmi Mo, Co, Ni, Fe et U, ladite faible quantité étant choisie pour être inférieure à la quantité globale du ou des composés de titane, yttrium, lanthane ou terres rares associés à l'alumine et ne pas excéder 5% du poids de la masse catalytique composite.

La surface spécifique de la masse catalytique composite, déterminée par la méthode BET d'adsorption d'azote, est avantageusement comprise entre 80 et 400 $m^2/g$ et se situe de préférence entre 120 et 400 $m^2/g$.

Lorsque la masse catalytique composite constitue seulement une portion du catalyseur promoteur de la réaction de CLAUS utilisé dans le procédé selon l'invention, l'autre portion dudit catalyseur consiste en un catalyseur CLAUS conventionnel tel que bauxite, alumine, charbon actif, zéolithe, alumine associée à au moins un sel d'un métal choisi parmi Fe, Co, Ni, Cu et Zn, ou mélanges de tels produits.

La masse catalytique composite peut être préparée en faisant appel aux diverses méthodes connues à cet effet et en particulier en opérant comme indiqué dans les citations FR-A- 2224203 et FR-A-2242144.

Les températures de mise en contact du mélange gazeux à désulfurer avec le catalyseur promoteur de la réaction de CLAUS, qui selon l'invention doivent être inférieures au point de rosée du soufre produit par ladite réaction, sont plus particulièrement choisies pour être, en outre, supérieures au point de rosée de l'eau contenue dans le milieu réactionnel prenant naissance lors de ladite mise en contact. De préférence, lesdites températures de mise en contact sont comprises entre 120°C et 170°C.

Les temps de séjour du mélange gazeux à désulfurer en présence du catalyseur promoteur de la réaction de CLAUS peuvent varier assez largement. Lesdits temps de séjour, qui correspondent au rapport du volume àpparent de catalyseur, exprimé en $m^3$, au débit de mélange gazeux, exprimé en $Nm^3/s$, passant au contact dudit catalyseur, ont avantageusement des valeurs allant de 1 à 15 s et de préférence de 3 à 10 s.

Le mélange gazeux à désulfurer, que l'on met en contact avec le catalyseur promoteur de la réaction de CLAUS et consistant en partie ou en totalité en la masse catalytique composite, renferme $H_2S$ et $SO_2$ en faible concentration globale, c'est-à-dire selon l'invention en concentration globale entre 0,05 et 6% en volume. Dans ledit mélange gazeux, le rapport molaire $H_2S:SO_2$ est avantageusement égal à environ 2:1, cette valeur correspondant à la stoechiométrie de la réaction de CLAUS.

Le mélange gazeux à désulfurer, que l'on traite selon l'invention, peut avoir des origines diverses. En particulier, ce mélange gazeux peut être un gaz résiduaire issu d'une usine à soufre CLAUS. Il peut également résulter de l'addition de la quantité requise de $SO_2$ à un gaz acide renfermant une faible quantité d'$H_2S$ et provenant, par exemple, de la gazéification du charbon ou des huiles lourdes ou bien être formé par addition de la quantité appropriée d'$H_2S$ à un gaz renfermant une faible quantité de $SO_2$, l'addition de $SO_2$ au gaz acide renfermant $H_2S$ ou d'$H_2S$ au gaz renfermant $SO_2$ pouvant être réalisée lors de la mise en contact avec le catalyseur promoteur de la réaction de CLAUS ou, de préférence, préalablement à cette mise en contact. Le mélange gazeux à désulfurer peut encore renfermer des composés organiques du soufre tels que COS, $CS_2$, mercaptans, dont la concentration globale dans la plupart des cas n'excède pas 1% environ en volume.

Durant son contact avec le mélange gazeux à désulfurer, le catalyseur promoteur de la réaction de CLAUS se charge de soufre. Périodiquement ledit catalyseur chargé de soufre est soumis à une régénération par balayage à l'aide d'un gaz non oxydant ayant une température entre 200°C et 500°C pour vaporiser le soufre retenu sur le catalyseur, puis on refroidit le catalyseur régénéré jusqu'à la température requise pour une nouvelle mise en contact avec le mélange gazeux à désulfurer, ce refroidissement étant réalisé au moyen d'un gaz inerte ayant une température inférieure à 160°C. Avantageusement le gaz de refroidissement est chargé de vapeur d'eau au moins pendant la phase finale du refroidissement du catalyseur régénéré.

Le gaz de balayage utilisé pour la régénération du catalyseur chargé de soufre peut être tel que méthane, azote, $CO_2$, vapeur d'eau ou mélanges de tels gaz ou encore consister en une fraction du mélange gazeux désulfuré ou en une fraction du mélange gazeux à traiter. Ledit gaz de balayage peut renfermer une certaine proportion, par exemple 0,5 à 25% en volume, d'un composé réducteur gazeux comme $H_2$, CO et en particulier $H_2S$, au moins au cours de la phase finale de la régénération, c'est-à-dire après la vaporisation de la plus grande partie du soufre déposé sur le catalyseur.

La mise en contact du mélange gazeux à désulfurer avec le catalyseur promoteur de la réaction de CLAUS est généralement effectuée dans une pluralité de zones de conversion catalytique, qui opèrent de telle sorte que l'une au moins desdites zones travaille en phase de régénération/refroidissement tandis que les autres zones sont en phase de réaction CLAUS. On peut encore opérer en ayant une ou plusieurs zones en phase de réaction CLAUS, au moins une zone en phase de régénération et au moins une zone en phase de refroidissement.

Le gaz de régénération circule de préférence en circuit fermé à partie d'une zone de chauffage, en passant successivement par la zone en cours de régénération et par une zone de refroidissement, dans laquelle la majeure partie du soufre qu'il contient est séparée par condensation, pour revenir à la zone de chauffage. Bien entendu le gaz de régénération peut également circuler en circuit ouvert.

Le gaz utilisé pour le refroissement du catalyseur régénéré est du même type que le gaz employé pour la régénération du catalyseur chargé de soufre, c'est-à-dire est un gaz sensiblement inerte. Les circuits de gaz de régénération et de gaz de refroidissement peuvent être indépendants l'un de l'autre. Le circuit de gaz de régénération défini ci-dessus peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

Comme indiqué précédemment, le gaz de refroidissement peut renfermer de la vapeur d'eau au moins pendant la phase finale du refroidissement du catalyseur régénéré et plus particulièrement lorsque la températuree du catalyseur régénéré en cours de refroidissement est tombée en-dessous d'environ 250°C. Toutefois le gaz de refroidissement peut renfermer de la vapeur d'eau dès le début de la phase de refroidissement du catalyseur régénéré. La quantité de vapeur d'eau que peut contenir le gaz de refroidissement peut varier assez largement et peut être comprise, par exemple, entre 1 et 50% en volume.

Les exemples suivants sont donnés à titre non limitatif pour illustrer l'invention.

EXEMPLE 1 :

On opérait dans une batterie de conversion catalytique formée de deux convertisseurs catalytiques montés en parallèle et présentant chacun une entrée et une sortie séparées par un lit fixe d'un catalyseur promoteur de la réaction de CLAUS, lesdits convertisseurs opérant de telle sorte qu'alternativement, par l'intermédiaire de vannes commutables par une horloge, l'un des convertisseurs était en phase de réaction, c'est-à-dire avait son entrée reliée à un conduit d'amenée du mélange gazeux à désulfurer et sa sortie connectée à l'entrée d'un incinérateur, tandis que l'autre convertisseur était en phase de régénération/refroidissement, c'est-à-dire était placé tout d'abord dans un circuit de régénération, comportant des moyens pour assurer la circulation d'un gaz de balayage non oxydant, constitué, en volume, de 70% d'azote et de 30% d'$H_2O$, à travers ledit convertisseur depuis un réchauffeur jusqu'à un condenseur à soufre et retour au réchauffeur, puis dans un circuit de refroidissement agencé pour faire circuler un gaz froid, de même composition que le gaz de régénération, à travers le convertisseur placé dans son circuit.

Le catalyseur promoteur de la réaction de CLAUS contenu dans chacun des convertisseurs catalytiques résultait de l'imprégnation de billes d'alumine activée, d'environ 2 à 5mm de diamètre, par de l'oxychlorure de titane suivie d'une calcination à 450°C, pendant 4 heures, des billes imprégnées, ledit catalyseur renfermant en poids, 7% de composé de titane, comptés en $TiO_2$, et 93% d'alumine et présentant une surface spécifique de 280m$^2$/g.

Le mélange gazeux à désulfurer avait la composition suivante en volume :

$H_2S$   : 0,28 %

$SO_2$   : 0,14 %

$H_2O$   : 30 %

$N_2$    : 69,58 %

Le mélange gazeux à désulfurer était injecté dans le convertisseur catalytique opérant en phase de réaction CLAUS avec une température de 140°C et un débit correspondant à un temps de séjour au contact du catalyseur ayant une valeur, exprimée dans les conditions normales de pression et de température, égale à 6 secondes. A la sortie dudit convertisseur catalytique on évacuait un mélange gazeux désulfuré ayant une température d'environ 145°C, que l'on dirigeait ensuite vers l'incinérateur.

Dans le convertisseur opérant en phase de régénération/refroidissement, on injectait tout d'abord le gaz de régénération amené préalablement à une température d'environ 300°C dans le réchauffeur du circuit de régénération, ledit gaz de régénération ayant un débit correspondant à un temps de séjour au contact du catalyseur à régénérer ayant une valeur, dans les conditions normales de pression et de température, égale à 3 secondes. Le gaz de régénération chargé de soufre issu du convertisseur en phase de régénération passait ensuite dans le condenseur à soufre du circuit de régénération, pour y être refroidi à environ 130°C de manière à séparer par condensation la plus grande partie du soufre qu'il contenait, puis retournait au réchauffeur pour être réutilisé pour la régénération.

Le catalyseur régénéré était ensuite refroidi à une température d'environ 140°C en faisant passer dans le convertisseur le contenant un courant de gaz de refroidissement ayant mêmes composition et débit que le gaz de régénération et une température d'environ 140°C.

Les convertisseurs catalytiques opéraient alternativement pendant 30 heures en phase de désulfuration, c'est-à-dire en phase de réaction CLAUS, et pendant 30 heures, dont 8 heures de refroidissement, en phase de régénération/refroidissement.

Après 50 cycles de fonctionnement comportant chacun une phase de désulfuration (réaction CLAUS) et une phase de régénération/refroidissement, la teneur globale des composés $H_2S$ et $SO_2$ dans le mélange gazeux désulfuré issu du convertisseur en phase de réaction CLAUS se stabilisait à la valeur 500 vpm (volume par million), ce qui correspond à un rendement de 88% pour la réaction de CLAUS dans la phase de désulfuration du mélange gazeux.

En opérant dans des conditions analogues à celles définies ci-dessus, mais en employant, à titre de catalyseur promoteur de la réaction de CLAUS, une alumine activée non imprégnée ayant les mêmes caractéristiques que l'alumine activée ayant servi à préparer le catalyseur utilisé selon l'invention, le mélange gazeux désulfuré issu du convertisseur catalytique en phase de réaction CLAUS renfermait une teneur globale en $H_2S$ et $SO_2$ ayant une valeur égale à 900 vpm après 50 cycles de fonctionnement, ce qui correspond à un rendement de 78,5% pour la réaction de CLAUS.

EXEMPLE 2 :

On opérait dans une installation analogue à celle utilisée dans l'exemple 1.

Le catalyseur promoteur de la réaction de CLAUS contenu dans chacun des convertisseurs catalytiques résultait de l'imprégnation de billes d'alumine activée, d'environ 2 à 5mm de diamètre, par une solution de chlorure de lanthane suivie d'un séchage puis d'une calcination à 500°C, pendant 4 heures, des billes imprégnées, ledit catalyseur renfermant, en poids, 6% de composé de lanthane, comptés en $La_2O_3$, et 94% d'alumine et présentant une surface spécifique de 300m$^2$/g. Le mélange gazeux à désulfurer avait la composition suivante en volume :

$H_2S$   : 0,50 %

$SO_2$   : 0,25 %

$H_2O$   : 30 %

$N_2$    : 69,25 %

Le mélange gazeux à désulfurer était introduit dans le convertisseur catalytique opérant en phase réaction de CLAUS avec une température de 135°C et un débit correspondant à un temps de séjour au contact du catalyseur ayant une valeur, exprimée dans les conditions normales de pression et de température, égale à 8 secondes. A la sortie dudit convertisseur catalytique on évacuait un mélange gazeux désulfuré ayant une température d'environ 145°C, que l'on dirigeait vers l'incinérateur.

Dans le convertisseur catalytique opérant en phase de régénération/refroidissement, on injectait tout d'abord le gaz de régénération amené préalablement à une température d'environ 300°C dans le réchauffeur du circuit de régénération, ledit gaz de régénération ayant un débit correspondant à un temps de séjour au contact du catalyseur à régénérer ayant une valeur, dans les conditions normales de pression et de température, égale à 4 secondes. Le gaz de régénération chargé de soufre issu du convertisseur catalytique en phase de régénération passait ensuite dans le condenseur à soufre du circuit de régénération, pour y être refroidi à environ 130°C de manière à séparer par condensation la plus grande partie du soufre qu'il contenait, puis retournait au réchauffeur pour être réutilisé pour la régénération.

Le catalyseur régénéré était ensuite refroidi à une température d'environ 135°C en faisant passer dans le convertisseur catalytique le contenant un courant de gaz de refroidissement ayant le même débit et la même composition, à savoir, en volume, 70% d'azote et 30% d'$H_2O$, que le gaz de régénération et une température d'environ 135°C.

Les convertisseurs catalytiques opéraient alternativement pendant 30 heures en phase de désulfuration, c'est-à-dire en phase de réaction CLAUS, et pendant 30 heures, dont 8 heures de refroidissement, en phase de régénération/refroidissement. Après une phase de stabilisation du catalyseur promoteur de la réaction de CLAUS, la teneur globale des composés $H_2S$ et $SO_2$ dans le mélange gazeux désu uré issu du convertisseur en phase de réaction CLAUS se maintenait à la valeur 800 vpm, ce qui correspond à un rendement de 89,3% pour la réaction de CLAUS dans la phase de désulfuration du mélange gazeux.

**Revendications**

1. Procédé de désulfuration d'un mélange gazeux renfermant $H_2S$ et $SO_2$ avec récupération desdits composés sous la forme de soufre, dans lequel on met ledit mélange gazeux en contact avec un catalyseur, qui est un promoteur de la réaction de CLAUS de formation de soufre entre $H_2S$ et $SO_2$ et comporte au moins une portion terminale constituée d'une masse catalytique composite résultant de l'association d'alumine avec au moins un composé d'un métal choisi parmi le titane, l'yttrium, le lanthane et les éléments des terres rares ayant un numéro atomique allant de 58 à 71, caractérisé en ce que la mise en contact du mélange gazeux à désulfurer avec le catalyseur promoteur de la réaction de CLAUS est réalisée à des températures inférieures à la température de rosée du soufre produit par ladite réaction de telle sorte que ledit soufre se dépose sur le catalyseur et en ce que dans la masse catalytique composite calcinée, la teneur pondérale globale du ou des composés de titane, yttrium, lanthane ou terres rares, exprimée en poids d'oxyde, représente 1 à 20 % de la somme de ladite teneur pondérale globale et du poids d'alumine.

2. Procédé selon la revendication 1, caractérisé en ce que la masse catalytique composite constitue la totalité du catalyseur promoteur de la réaction de CLAUS.

3. Procédé selon la revendication 1 ou 2, caractérisé en ce que les métaux, dont un ou plusieurs composés sont associés à l'alumine dans la masse catalytique composite, sont choisis parmi titane, yttrium, lanthane, néodyme, praséodyme, samarium et gadolinium.

4. Procédé selon la revendication 1 ou 2, caractérisé en ce que les métaux, dont un ou plusieurs composés sont associés à l'alumine dans la masse catalytique composite, sont le titane et le lanthane.

5. Procédé selon l'une des revendications 1 à 4, caractérisé en ce que la masse catalytique composite renferme encore une faible quantité d'au moins un composé d'un élément choisi parmi Mo, Co, Ni, Fe et U, ladite faible quantité étant choisie pour être inférieure à la quantité globale du ou des composés de titane, yttrium, lanthane ou terres rares associés à l'alumine et ne pas excéder 5% du poids de la masse catalytique composite.

6. Procédé selon l'une des revendications 1 à 5, caractérisé en ce que la masse catalytique composite possède une surface spécifique, déterminée par la méthode BET d'adsorption d'azote, comprise entre 80 et 400m$^2$/g et de préférence entre 120 et 400m$^2$/g.

7. Procédé selon l'une des revendications 1 à 6, caractérisé en ce que les températures de mise en contact du mélange gazeux à désulfurer avec le catalyseur promoteur de la réaction de CLAUS sont choisies pour être supérieures au point de rosée de l'eau contenue dans le milieu réactionnel prenant naissance lors de ladite mise en contact.

8. Procédé selon la revendication 7, caractérisé en ce que les températures de mise en contact du mélange gazeux à désulfurer avec le catalyseur promoteur de la réaction de CLAUS sont comprises entre 120°C et 170°C.

9. Procédé selon l'une des revendications 1 à 8, caractérisé en ce que les temps de séjour du mélange gazeux à désulfurer en présence du catalyseur promoteur de la réaction de CLAUS, déterminés dans les conditions normales de pression etde température, vont de 1 à 15 s et de préférence de 3 à 10 s.

10. Procédé selon l'une des revendications 1 à 9, caractérisé en ce que le mélange gazeux à désulfurer renferme une concentration globale en $H_2S$ et $SO_2$ comprise entre 0,05 et 6% en volume.

11. Procédé selon l'une des revendications 1 à 10, caractérisé en ce que le rapport molaire $H_2S:SO_2$ dans le mélange gazeux à désulfurer est égal à environ 2:1.

12. Procédé selon l'une des revendications 1 à 11, caractérisé en ce que le catalyseur promoteur de la réaction de CLAUS chargé de soufre est soumis périodiquement à une régénération par balayage à l'aide d'un gaz non oxydant ayant une température entre 200°C et 500°C pour vaporiser le soufre retenu sur le catalyseur, puis le catalyseur régénéré est refroidi jusqu'à la température requise pour une nouvelle mise en contact avec le mélange gazeux à désulfurer, ledit refroidissement étant réalisé au moyen d'un gaz inerte ayant une température inférieure à 160°C.

13. Procédé selon la revendication 12, caractérisé en ce que le gaz de balayage utilisé pour la régénération du catalyseur chargé de soufre, renferme une certaine proportion, par exemple 0,5 à 25% en volume, d'un composé réducteur gazeux comme $H_2$, CO ou $H_2S$ au moins au cours de la phase finale de la régénération.

14. Procédé selon la revendication 12 ou 13, caractérisé en ce que le gaz de refroidissement est chargé de vapeur d'eau au moins pendant la phase finale de refroidissement du catalyseur régénéré.

15. Procédé selon l'une des revendications 12 à 14, caractérisé en ce que la mise en contact du mélange gazeux à désulfurer avec le catalyseur promoteur de la réaction de CLAUS est effectuée dans une pluralité de zones de conversion catalytique, qui opèrent de telle sorte que l'une au moins desdites zones travaille en phase de régénération/refroidissement, tandis que les autres zones sont en phase de réaction CLAUS.

16. Procédé selon l'une des revendications 12 à 14, caractérisé en ce que la mise en contact du mélange gazeux à désulfurer avec le catalyseur promoteur de la réaction de CLAUS est effectuée dans une pluralité de zones de conversion catalytique, qui opèrent de telle sorte qu'il y ait une ou plusieurs desdites zones en phase de réaction CLAUS, au moins une zone en phase de régénération et au moins une zone en phase de refroidissement.

**Patentansprüche**

1. Verfahren zur Entschwefelung eines $H_2S$ und $SO_2$ enthaltenden Gasgemisches unter Abtrennung dieser Verbindungen in Form von Schwefel, wobei man das Gasgemisch mit einem Katalysator in Berührung bringt, welcher die CLAUS-Reaktion der Schwefelbildung zwischen $H_2S$ und $SO_2$ beschleunigt und wenigstens einen Endbereich enthält, der aus einer katalytischen Verbundstoffmasse besteht, die erhalten wird durch Verbindung von Tonerde mit wenigstens einer Verbindung eines Metalls, ausgewählt unter Titan, Yttrium, Lanthan und den Seltenerdelementen mit einer Ordnungszahl von 58 bis 71, dadurch gekennzeichnet, daß die Kontaktierung des zu entschwefelnden Gasgemisches mit dem die CLAUS-Reaktion beschleunigenden Katalysator bei Temperaturen unterhalb des Taupunktes des durch diese Reaktion erzeugten Schwefels durchgeführt wird, so daß dieser sich auf dem Katalysator absetzt, und der Gesamtgewichtsanteil der Verbindung bzw. Verbindungen von Titan, Yttrium, Lanthan bzw. der Seltenen Erden an der geglühten katalytischen Verbundstoffmasse, ausgedrückt in Gewicht an Oxid, 1 bis 20 % der Summe aus Gesamtgewichtsanteil und Gewicht der Tonerde ausmacht.

2. Verfahren nach Anspruch 1, dadurch gekennzeichnet, daß die katalytische Verbundstoffmasse die Gesamtheit des die CLAUS-Reaktion beschleunigenden Katalysators bildet.

3. Verfahren nach Anspruch 1 oder 2, dadurch gekennzeichnet, daß die Metalle, deren Verbindung bzw. Verbindungen in der katalytischen Verbundstoffmasse mit der Tonerde verbunden sind, ausgewählt werden unter Titan, Yttrium, Lanthan, Neodym, Praseodym, Samarium und Gadolinium.

4. Verfahren nach Anspruch 1 oder 2, dadurch gekennzeichnet, daß die Metalle, deren Verbindung bzw. Verbindungen in der katalytischen Verbundstoffmasse mit der Tonerde verbunden sind, Titan und Lanthan sind.

5. Verfahren nach einem der Ansprüche 1 bis 4, dadurch gekennzeichnet, daß die katalytische Verbundstoffmasse außerdem noch eine geringe Menge wenigstens einer Verbindung eines Elements, ausgewählt unter Mo, Co, Ni, Fe und U enthält, wobei diese geringe Menge so gewählt wird, daß sie unterhalb der Gesamtmenge der Verbindung bzw. der Verbindungen von Titan, Yttrium, Lanthan oder der Seltenen Erden, die mit der Tonerde verbunden sind, liegt und 5 Gew.% der katalytischen Verbundstoffmasse nicht übersteigt.

**6.** Verfahren nach einem der Ansprüche 1 bis 5, dadurch gekennzeichnet, daß die katalytische Verbundstoffmasse eine spezifische Oberfläche, ermittelt nach der BET-Methode der Stickstoff adsorption , zwischen 80 und 400 m2/g und vorzugsweise zwischen 120 und 400 m2/g besitzt.

**7.** Verfahren nach einem der Ansprüche 1 bis 6, dadurch gekennzeichnet, daß die Temperaturen für die Kontaktierung des zu entschwefelnden Gasgemisches mit dem die CLAUS-Reaktion beschleunigenden Katalysator so gewählt werden, daß sie oberhalb des Taupunktes des im bei der Kontaktierung entstehenden Reaktionsmedium enthaltenen Wassers liegen.

**8.** Verfahren nach Anspruch 7, dadurch gekennzeichnet, daß die Temperaturen für die Kontaktierung des zu entschwefelnden Gasgemisches mit dem die CLAUS-Reaktion beschleunigenden Katalysator zwischen 120 und 170°C liegen.

**9.** Verfahren nach einem der Ansprüche 1 bis 8, dadurch gekennzeichnet, daß die Verweildauer des zu entschwefelnden Gasgemisches in Anwesenheit des die CLAUS-Reaktion beschleunigenden Katalysators, ermittelt unter normalen Druck- und Temperaturbedingungen. zwischen 1 und 15 s und vorzugsweise zwischen 3 und 10 s liegt.

**10.** Verfahren nach einem der Ansprüche 1 bis 9, dadurch gekennzeichnet, daß das zu entschwefelnde Gasgemisch eine Gesamtkonzentration an $H_2S$ und $SO_2$ zwischen 0,05 und 6 Vol.% aufweist.

**11.** Verfahren nach einem der Ansprüche 1 bis 10, dadurch gekennzeichnet, daß das Molarverhältnis $H_2S;SO_2$ in dem zu entschwefelnden Gasgemisch ca. 2:1 beträgt.

**12.** Verfahren nach einem der Ansprüche 1 bis 11, dadurch gekennzeichnet, daß der mit Schwefel beladene, die CLAUS-Reaktion beschleunigende Katalysator von Zeit zu Zeit durch Spülen mit Hilfe eines nichtoxidierenden Gases bei einer Temperatur zwischen 200 und 500°C regeneriert wird, um den auf dem Katalysator zurückgehaltenen Schwefel zu verdampfen, und der regenerierte Katalysator dann bis zu der für eine erneute Kontaktierung mit dem zu entschwefelnden Gasgemisch erforderlichen Temperatur abgekühlt wird, wobei die Abkühlung mit Hilfe eines eine Temperatur von unter 160°C aufweisenden Inertgases durchgeführt wird.

**13.** Verfahren nach Anspruch 12, dadurch gekennzeichnet, daß das für die Regeneration des mit Schwefel beladenen Katalysators verwendete Spülgas eine gewisse Menge z.B. 0,5 bis 25 Vol.% einer gasförmigen reduzierenden Verbindung wie $H_2$, CO oder $H_2S$ wenigstens im Verlauf der Endphase der Regeneration enthält.

**14.** Verfahren nach Anspruch 12 oder 13, dadurch gekennzeichnet, daß das Kühlgas wenigstens während der Endphase der Abkühlung des regenerierten Katalysators mit Wasserdampf beladen ist.

**15.** Verfahren nach einem der Ansprüche 12 bis 14, dadurch gekennzeichnet, daß die Kontaktierung des zu entschwefelnden Gasgemisches mit dem die CLAUS-Reaktion beschleunigenden Katalysator in einer Vielzahl von Zonen der katalytischen Umwandlung durchgeführt wird, die so arbeiten, daß wenigstens eine dieser Zonen sich in der Phase der Regeneration und Abkühlung befindet, während die übrigen Zonen in der Phase der CLAUS-Reaktion vorliegen.

**16.** Verfahren nach einem der Ansprüche 12 bis 14, dadurch gekennzeichnet, daß die Kontaktierung des zu entschwefelnden Gasgemisches mit dem die CLAUS-Reaktion beschleunigenden Katalysator in einer Vielzahl von Zonen der katalytischen Umwandlung durchgeführt wird, die so arbeiten, daß eine oder mehrere Zonen in der Phase der CLAUS-Reaktion, wenigstens eine Zone in der Phase der Regeneration und wenigstens eine Zone in der Phase der Abkühlung vorliegen.

**Claims**

**1.** Process of desulphuring a gaseous mixture containing $H_2S$ and $SO_2$ and recovering said compounds in the form of sulphur, in which the gaseous mixture is brought into contact with a catalyst, which is a promoter of the CLAUS reaction forming sulphur between $H_2S$ and $SO_2$, and comprises at least one final portion consisting
of a composite catalytic mass resulting from the combination of alumina with at least one compound of a metal selected from among titanium, yttrium, lanthanum and elements of rare earths metals having an atomic number of from 58 to 71, characterised in that the gaseous mixture to be desulphurated is brought into contact with the catalyst promoter of the CLAUS reaction at temperatures which are less than the dew temperature of the sulphur produced by said reaction, in such a manner that said sulphur is deposited on the catalyst and that, in the calcinated composite catalytic mass, the total weight content of the component or components titanium, yttrium, lanthanum or rare earths, expressed as oxide weight, represents from 1 to 20 % of the sum of said total weight content and of the alumina weight.

**2.** Process according to Claim 1, characterised in that the composite catalytic mass constitutes the whole of the catalyst promoter of the CLAUS reaction.

**3.** Process according to Claim 1 or 2, characterised in that the metals, one or several compounds of which are associated with the alumina in the composite catalytic mass, are selected from among titanium, yttrium, lanthanum, neodymium, praseodymium, samarium and gadolinium.

**4.** Process according to Claim 1 or Claim 2, characterised in that the metals, one or several compounds of which are associated with the alumina in the composite catalytic mass, are titanium and lanthanum.

**5.** Process according to any one of Claims 1 to 4, characterised in that the composite catalytic mass furthermore contains a low quantity of at least one compound of an element selected from among Mo, Co, Ni, Fe and U, said low quantity being selected to be less than the total quantity of the compounds of titanium, yttrium, lanthanum, or rare earths associated with the alumina and not exceeding 5% by weight of the composite catalytic mass.

**6.** Process according to any one of Claims 1 to 5, characterised in that the composite catalytic mass presents a specific surface, determined by the BET method of nitrogen adsorption, of between 80 and 400 $m^2$/g and preferably between 120 and 400 $m^2$/g.

**7.** Process according to any one of Claims 1 to 6, characterised in that the temperatures at which the gaseous mixture to be desulphurated is brought into contact with the catalyst promoter of the CLAUS reaction are selected so as to be greater than the dew point of the water contained in the reactive mixture which is produced during said bringing into contact.

**8.** Process according to Claim 7, characterised in that the temperatures at which the gaseous mixture to be desulphurated is brought into contact with the catalyst promoter of the CLAUS reaction are between 120°C and 170°C.

**9.** Process according to any one of Claims 1 to 8, characterised in that the time for which the gaseous mixture to be desulphurated remains in the presence of the catalyst promoter of the CLAUS reaction, determined in normal pressure and temperature conditions, is from 1 to 15 seconds and, preferably, from 3 to 10 seconds.

**10.** Process according to any one of Claims 1 to 9, characterised in that the gaseous mixture to be desulphurated contains a total concentration of $H_2S$ and $SO_2$ of between 0.05 and 6% by volume.

**11.** Process according to any one of Claims 1 to 10, characterised in that the molar ratio $H_2S:SO_2$ in the gaseous mixture to be desulphurated is, approximately 2:1.

**12.** Process according to any one of Claims 1 to 11, characterised in that the catalyst promoter of the CLAUS reaction, loaded with sulphur, is periodically subjected to a regeneration by purging with the aid of a non-oxidising gas having a temperature of between 200°C and 500°C to vaporise the sulphur retained on the catalyst, and then the regenerated catalyst is cooled until it reaches the required temperature to be brought back into contact with the gaseous mixture to be desulphurated, said cooling being performed by means of an inert gas with a temperature of less than 160°C.

**13.** Process according to Claim 12, characterised in that the purging gas which is used to regenerate the catalyst, which is loaded with sulphur, contains a certain proportion, for example 0.5 to 25% by volume, of a gaseous reducer compound such as $H_2$, CO or $H_2S$ at least in the final phase of the regeneration.

**14.** Process according to Claim 12 or 13, characterised in that the cooling gas is loaded with water vapour, at least in the final phase of the cooling of the regenerated catalyst.

**15.** Process according to any one of Claims 12 to 14, characterised in that the bringing into contact of the gaseous mixture to be desulphurated with the catalyst promoter of the CLAUS reaction is performed in a plurality of catalytic conversion zones, which act in such a manner that at least one of said zones is in a regeneration/cooling phase, whereas the other zones are in the CLAUS reaction phase.

**16.** Process according to any one of Claims 12 to 14, characterised in that the gaseous mixture to be desulphurated is brought into contact with the catalyst promoter of the CLAUS reaction in a plurality of catalytic conversion zones, which act in such a manner that there are one or more of said zones in the CLAUS reaction phase, at least one zone in the regeneration phase, and at least one zone in the cooling phase.